# DEMANDE DE BREVET EUROPEEN

(11) **EP 0 971 281 A1**
(43) Date de publication de la demande: **12.01.2000**
(21) Numéro de dépôt: 99401534.5
(22) Date de dépôt: 21.06.1999
(51) Int. Cl.: G06F 1/00

(54) **Procédé et système de gestion de licences dans un contexte client/serveur**

(30) Priorité: 09.07.1998 FR 9808806
(71) Demandeur: BULL S.A., 78430 Louveciennes (FR)
(72) Inventeur: Dujonc, Jean-Yves, 78580 Maule (FR); Leydier, Pascal, 91730 Torfou (FR); Machet, François, 91400 Orsay (FR)

(57) **Abrégé**

La présente invention concerne un procédé de gestion de licences dans un contexte Client/Serveur du type consistant à autoriser ou non l'accès d'une pluralité de clients (1₁ à 1ₙ) demandeurs de services, à au moins un serveur applicatif destinataire (4) via un réseau de communication (5), en fonction d'un compte (8ᵢ) de licences, attribué à chaque demandeur et détenu par au moins un serveur de licences (7). Selon l'invention, le procédé consiste à établir une connexion spécifique (6) entre le serveur applicatif (4) destinataire et le serveur de licences (7). Après avoir authentifié le client (1₁ à 1ₙ), le serveur applicatif (4) se substitue à lui pour obtenir et restituer les licences attribuées au client (1₁ à 1ₙ) via la connexion spécifique (6).

Les applications vont notamment à la gestion des licences attribuées à plusieurs milliers de stations cliente connectées via le réseau Internet à une pluralité de serveurs applicatifs.

## Description

La présente invention se rapporte au domaine des réseaux de communication et à l'environnement Client/Serveur.

Elle concerne plus particulièrement un procédé de gestion des droits d'accès à des services déterminés, appelés licences, permettant d'optimiser l'utilisation du réseau de communication dans un contexte ou des milliers de clients se connectent simultanément.

Dans ce type d'environnement, des applications informatiques sont distribuées, ou réparties, entre ordinateurs, serveurs et stations de travail ; le serveur étant défini comme une base de ressources accessible par un utilisateur via un réseau de communication, notamment le réseau Internet en exploitant le protocole TCP/IP, abréviations anglo-saxonnes pour "Transfer Control Protocol/Internet Protocol".

Un serveur de licences est un serveur applicatif particulier contenant un nombre déterminé de licences, constituant un compte de licences, attribué à un usager et qui permet d'accorder ou non à chaque station de travail, ou station cliente, un droit d'accès à un ou plusieurs services. Le nombre de stations cliente pouvant fonctionner dans cet environnement est directement lié au nombre de licences installées sur le serveur de licences.

Une licence correspond généralement à un droit d'utilisation d'un produit qui est implanté d'origine sur la station ou introduit ultérieurement sur la station par téléchargement via le réseau.

Ce produit, appelé "produit client" dans la suite de la description, concerne un programme logiciel capable de communiquer avec un serveur dont le but est de pouvoir demander des services auprès d'autres programmes logiciels installés sur des serveurs qui sont généralement eux-mêmes installés sur des machines différentes.

Les demandes de services se font au travers de connexions logiques qui s'appuient sur le réseau de communication entre des machines de type client et des machines de type serveur.

Avant de pouvoir fonctionner normalement, le produit client établit au préalable une connexion vers le serveur de licences destinataire pour demander l'attribution d'une licence. Après lui avoir éventuellement accordé, le serveur de licences décrémente le compte de licences attribuées au client.

Après une réponse positive, le client est en mesure de travailler et d'établir une connexion vers le serveur applicatif destinataire. Lorsque le client termine son traitement, il restitue la licence au serveur en émettant une requête sur la connexion au serveur de licence. Ce dernier incrémente alors son compte de licences.

En cas de réponse négative, notamment quand le serveur de licence a épuisé son compte maximal de licences, le produit client refuse alors de fonctionner et ne permet plus de se connecter au serveur applicatif destinataire.

Dans ce type de gestion de licences, un mécanisme de surveillance doit être mis en place pour détecter des anomalies de fonctionnement non vues du côté serveur de licences.

Ces anomalies correspondent, par exemple, à des demandes de licences de la station cliente à la suite d'un dysfonctionnement côté station cliente alors que celle-ci a déjà obtenu une licence.

Dans ce mécanisme de surveillance, la station cliente émet, à intervalle régulier, un message appelé également "polling" en terminologie anglo-saxonne, prouvant au serveur de licences que la station fonctionne en continu, ceci afin de restituer la licence en cas de dysfonctionnement de la station et ainsi de pouvoir réattribuer cette licence à une autre station. Le serveur de licences peut ainsi maintenir à jour son compte de licences.

L'utilisation d'un serveur de licences dans cet environnement perturbe le système. En effet, les connexions au serveur de licences et les mécanismes de surveillance sous-jacents consomment de façon non négligeable à la fois des ressources du réseau de communication et des ressources machine aussi bien client que serveur.

La perturbation introduite dans le réseau de communication est d'autant plus importante que le nombre de stations cliente est élevé ; ce nombre pouvant atteindre plusieurs milliers d'utilisateurs connectés simultanément. Cette perturbation se traduit par un bruit de fond pouvant être important et une diminution des temps de réponse sur les connexions des serveurs applicatifs voire même un blocage de tout le réseau.

Une solution pour pallier ces inconvénients consisterait à augmenter la bande passante du réseau de façon à absorber le trafic dû à la gestion de licences. Cependant, une telle solution nécessiterait d'adapter le média de communication déjà existant, voire de le remplacer, entraînant par conséquent des coûts importants pour l'utilisateur vis-à-vis duquel la gestion des licences doit être transparente.

Une autre solution consisterait à disposer un serveur de licences simplifié dans chaque station cliente, éliminant ainsi les connexions vers le serveur de licences. Cette solution peut être intéressante pour un nombre restreint de clients mais elle devient vite inadaptée quand plusieurs milliers de clients s'exécutent simultanément. En effet, cette solution est, d'une part, coûteuse pour l'usager qui dispose d'une grande quantité de stations et elle ne permet pas, d'autre part, une répartition optimale des licences entre tous les usagers.

L'invention a notamment pour but de pallier ces inconvénients.

Le but de l'invention est de diminuer voire supprimer la pollution de la bande passante du réseau de communication due aux mécanismes de surveillance mis en oeuvre par la gestion des licences dans un environnement Client/Serveur.

C'est le serveur applicatif destinataire qui obtiendra et rendra les licences pour le compte du client. Si le serveur applicatif ne peut obtenir la licence auprès du serveur de licences, il refusera la connexion applicative. Le serveur applicatif doit donc être en mesure d'identifier le client qui désire se connecter.

A cet effet, l'invention a pour premier objet un procédé de gestion de licences dans un contexte Client/Serveur du type consistant à autoriser ou non l'accès d'une pluralité de clients demandeurs de services, à au moins un serveur applicatif destinataire via un réseau de communication, en fonction d'un compte de licences, attribué à chaque demandeur et détenu par au moins un serveur de licences.

Le procédé selon l'invention est caractérisé en ce qu'il consiste à établir une connexion spécifique entre le serveur applicatif destinataire et le serveur de licences, et en ce que le serveur applicatif après avoir authentifié le client se substitue à lui pour obtenir et restituer les licences attribuées au client via la connexion spécifique.

Le procédé selon la revendication comporte les étapes successives suivantes :
- établissement d'une première connexion, à la demande de la station cliente, entre la station cliente et le serveur applicatif destinataire ;
- identification du produit client par le serveur applicatif destinataire pour déterminer si son utilisation est soumise à licence ;
- établissement d'une deuxième connexion entre le serveur applicatif et le serveur de licences, par le serveur applicatif;
- émission vers le serveur de licences d'une demande de licence au titre de la station cliente, par le serveur applicatif ; et
- en cas de réponse positive du serveur de licences à la demande du serveur applicatif, maintien de la première connexion avec la station cliente et autorisation d'utiliser ses services ; ou
- en cas de réponse négative du serveur de licences à la demande du serveur applicatif, rupture de la première connexion avec la station cliente.

L'invention a également pour objet un système pour la mise en oeuvre du procédé ci-dessus caractérisé en ce qu'il comporte :
- au moins un serveur applicatif apte à authentifier une station cliente qui désire se connecter à lui par une première connexion via le réseau de communication ;
- au moins un produit client installé dans la station cliente et apte à communiquer avec le serveur applicatif destinataire via la première connexion ;
- au moins un serveur de licences détenant au moins un compte de licences attribué à la station cliente ; et
- une deuxième connexion établie entre le serveur applicatif destinataire et le serveur de licences sur laquelle transitent les informations relatives à la station cliente.

Selon une caractéristique du système ci-dessus, le serveur applicatif est un serveur de type Telnet communiquant, au travers du réseau Internet en exploitant le protocole TCP/IP, des informations d'authentification de la station cliente fournies par le produit client installé dans la station cliente.

Selon une autre caractéristique, le système comporte une pluralité de serveurs applicatif comportant chacun l'identifiant du serveur et son compte courant de licences, et une pluralité de serveurs de licences comportant chacun l'identifiant du serveur et le compte de licences maximal attribué à un produit client référencé ; chaque serveur applicatif étant couplé à son serveur de licences respectif par une seule connexion.

L'invention a notamment pour avantage de remplacer les connexions nécessaires pour supporter les "polling" entre les clients et le serveur de licences, soit autant que de produits client, par une seule connexion entre le serveur applicatif destinataire et le serveur de licences.

D'autres avantages et caractéristiques de la présente invention apparaîtront à la lecture de la description qui suit faite en référence aux figures annexées qui représentent:
- la figure 1, un schéma de principe du procédé selon l'invention ;
- la figure 2, un mode de réalisation d'un système de gestion de licences pour la mise en oeuvre du procédé selon l'invention ; et
- la figure 3, un exemple de structure d'un fichier de contexte, distribué sur plusieurs serveurs de licences.

Dans la suite de la description on emploiera indifféremment les expressions station cliente et client pour définir le demandeur de services, connecté au réseau de communication.

De même, on assimilera souvent le produit client avec la station cliente à laquelle il se rapporte.

Sur les figures, les éléments homologues sont désignés par le même repère.

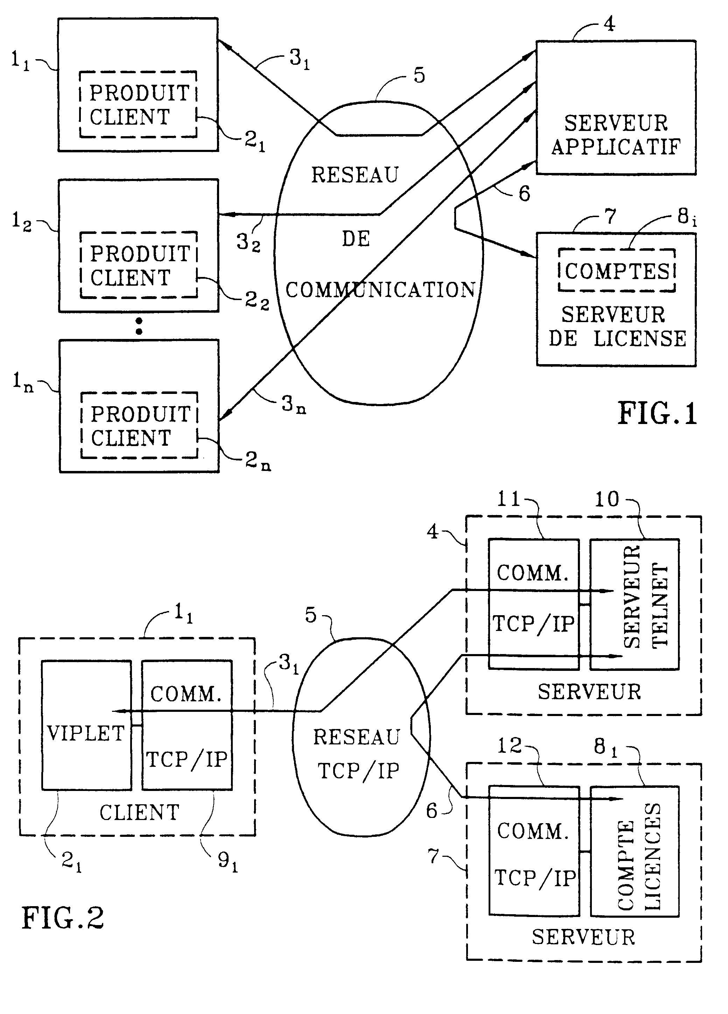

La figure 1 illustre schématiquement le principe mis en oeuvre par le procédé selon l'invention.

Le procédé selon l'invention est destiné à gérer les licences accordées à une pluralité de clients matérialisés respectivement par les stations clientes 1ᵢ, avec i=1 à n, et dans lesquelles sont installés respectivement des produits client 2ᵢ délimités respectivement par une ligne fermée discontinue.

Des premières connexions 3ᵢ, symbolisées par des flèches bidirectionnelles, sont établies respectivement entre chaque station cliente 1ᵢ et un serveur applicatif 4 destinataire via un réseau de communication 5.

Une deuxième connexion 6, symbolisée également par une flèche bidirectionnelle, est établie entre le serveur applicatif 4 et un serveur de licences 7 détenant les comptes 8ᵢ de licences, attribués respectivement aux différents clients 1ᵢ.

Dans le cas ou le serveur applicatif 4 et le serveur de licences 7 sont hébergés sur des machines différentes, une seule connexion 6 via le réseau 5 est nécessaire entre le serveur applicatif 4 et le serveur de licences 7.

Un scénario typique mis en oeuvre par le procédé de gestion selon l'invention est le suivant :
1. installation sur le serveur de licences 7 d'un compte 8ᵢ de licences attribué à un client 1ᵢ ;
2. installation sur la station cliente 1ᵢ du produit client 2ᵢ ;
3. établissement d'une connexion 6, à la demande du client 1ᵢ, entre la station cliente 1ᵢ et le serveur applicatif 4 destinataire ;
4. identification du produit client 2ᵢ par le serveur applicatif 4 destinataire pour déterminer si son utilisation est soumise à licence ;
5. établissement d'une connexion 6 entre le serveur applicatif 4 et le serveur de licences 7, par le serveur applicatif 4 ;
6. émission vers le serveur de licences 7 d'une demande de licence au titre de la station cliente 1ᵢ, par le serveur applicatif 4 ;
7. en cas de réponse positive du serveur de licences 7 à la demande du serveur applicatif 4, maintien de la connexion 3ᵢ entre la station cliente 1ᵢ et le serveur applicatif 4, et autorisation d'utiliser ses services ;
8. en cas de réponse négative du serveur de licences 7, à la demande du serveur applicatif 4, rupture de la connexion 3i entre la station cliente 1ᵢ et le serveur applicatif 4.

Le procédé selon l'invention est remarquable en ce que quel que soit le nombre de stations clientes 1ᵢ connectées à un serveur applicatif 4, la gestion des licences ne consomme qu'une seule connexion 6 au réseau 5.

Il n'y a plus de tentative de connexion depuis la station cliente li vers le serveur de licences 7. La seule connexion de la station cliente 1i est la connexion 6 à destination du serveur applicatif 4.

La figure 2 illustre un mode de réalisation d'un système de gestion de licences pour la mise en oeuvre du procédé selon l'invention.

Dans un but de clarté, le mode de réalisation est volontairement réduit à une configuration la plus simple dans laquelle une seule station cliente 1₁ communique avec un seul serveur applicatif 4 et un seul serveur de licences 7 via un réseau 5 de communication.

La station cliente 1₁, le serveur applicatif 4 et le serveur de licences 7 sont délimités respectivement par une ligne fermée discontinue.

La station cliente Il est matérialisée par son produit client 2₁ dénommé VIPLET, marque déposée par la demanderesse, et son commutateur TCP/IP 9₁.

Le produit client 2₁ VIPLET est une applet en Java émulant un terminal de type VIP, abréviations anglo-saxonnes pour "Visual Information Projection", qui est un terminal ayant une présentation particulière vis à vis d'un serveur applicatif donné.

Une applet est un programme en langage Java qui s'exécute dans un logiciel de navigation, incluse ou embarquée, à l'intérieur d'une page Web.

Le serveur applicatif 4 est matérialisé par son produit serveur Telnet 10 et son commutateur TCP/IP 11.

Le produit Telnet 10 est un service supporté par la cinquième couche du modèle OSI, abréviations anglo-saxonnes pour "Open Systems Interconnection", qui est défini par l'ISO, abréviations anglo-saxonnes pour "International Standardization Organization". Il consiste en un programme d'émulation de terminal (associé au protocole TCP/IP) permettant à un utilisateur de se connecter à un autre ordinateur.

Certains services, et notamment le service Telnet, supportent des mécanismes permettant l'échange de paramètres définis par le client en fonction de son application. Ces services sont donc particulièrement adaptés pour véhiculer l'identification du produit client.

Le serveur de licences 7 est matérialisé par ses comptes 8₁ et son commutateur TCP/IP 12.

Les commutateurs TCP/IP 9₁, 11 et 12 sont des dispositifs permettant d'établir ou d'interrompre des connexions temporaires établies entre plusieurs points quelconques d'un réseau.

Dans ce mode de réalisation, la station cliente 1₁ et le serveur applicatif 4 communiquent entre eux via une première liaison 3₁ empruntant le réseau Internet 5 en utilisant le protocole TCP/IP.

Le serveur applicatif 4 et le serveur de licences 7 communiquent entre eux via une deuxième liaison 6 empruntant le même réseau Internet 5.

Un scénario relatif aux échanges entre les serveurs 4, 7 et la station cliente 1₁ est décrit ci-après, à titre d'exemple non limitatif:
1. le serveur Telnet 10 établit une connexion TCP/IP 6 avec le serveur de licence 7 ;
2. le produit client 2₁ VIPLET est installé sur la station cliente 1₁ par exemple, par l'intermédiaire d'une connexion sur un serveur HTTP, abréviations anglo-saxonnes pour "Hyper Text Transfert Protocol", non représentée ;
3. le produit client 2₁ VIPLET établit une première connexion 3₁ avec le serveur Telnet destinataire ;
4. le serveur Telnet 10 et le produit client 2₁ VIPLET s'authentifient mutuellement et le serveur 10 en déduit alors l'identification du produit client 2₁ ;
5. le produit client 2₁ étant sous licence, le serveur Telnet 10 émet une demande de licence, sur la deuxième connexion 6, pour le produit client VIPLET 2₁ qu'il vient d'identifier ;
6. en fonction du compte 8₁ de licences accordées pour le produit client VIPLET 2₁, le serveur de licence 7 répond positivement ou négativement à la demande.
7. dans le cas d'une réponse positive, le serveur Telnet 10 maintient sa connexion 3₁ avec le produit client VIPLET 2₁ et l'autorise à utiliser ses services ;
8. dans le cas d'une réponse négative, le serveur Telnet 10 rompt sa connexion 3₁ avec le produit client VIPLET 2₁.

La présente invention n'est bien sûr pas limitée au mode de réalisation précédent et peut notamment s'appliquer à un grand nombre de stations clientes (plusieurs milliers) connectés à différents serveurs applicatifs et serveurs de licences ; chaque serveur applicatif ne nécessitant qu'une seule connexion avec son serveur de licence.

Selon une caractéristique de l'invention, le serveur de licences gère un fichier interne, appelé fichier de contexte, contenant les paramètres nécessaires à l'authentification du produit client vis-à-vis duquel il possède un compte de licences.

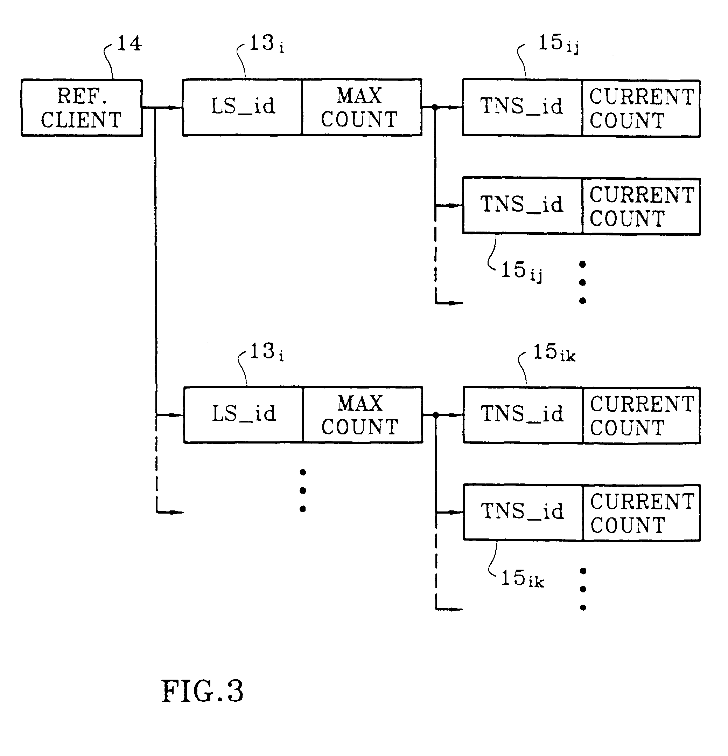

La figure 3 illustre un exemple de structure d'un tel fichier, dans un contexte où cohabite une pluralité de serveurs de licences 13ᵢ , avec i = 1 à n, matérialisés respectivement par l'identifiant, LS_id, du serveur et le nombre maximal de licences, Max Count, attribué à un produit client référencé 14.

Chaque serveur de licences 13ᵢ communique respectivement avec une pluralité de serveurs applicatifs 15ᵢⱼ et 15ᵢₖ, avec j = 1 à m et k= 1 à p. Ces serveurs 15ᵢⱼ et 15ᵢₖ sont matérialisés par l'identifiant du serveur applicatif, TNS_id, et le compte courant de licences, Current Count, accordées pour le serveur.

Dans ce cas, le fichier est identique pour tous les serveurs de licences 13ᵢ et sa gestion est partagée entre tous les serveurs 13ᵢ.

Dans un tel contexte, un produit client référencé 14 dispose ainsi d'une pluralité de comptes de licences 8ᵢ ; chaque compte 8ᵢ se rapportant à une pluralité de services, et autorisant ou non l'accès à ces services.

Dans ce fichier, à un produit client référencé 14 correspond une arborescence matérialisant les différents liens entre les serveurs applicatifs 15ᵢⱼ et 15ᵢₖ et les serveurs de licences 13ᵢ.

Une liste non exhaustive des principales informations échangées sur la connexion 6 entre un serveur applicatif 15ᵢⱼ ou 15ᵢₖ et un serveur de licences 13ᵢ est donnée ci-après.

Les principaux événements gérés par un serveur de licences 13ᵢ sont les suivants :
- messages émis par le serveur applicatif 15ᵢⱼ ou 15ᵢₖ vers le serveur de licences 13ᵢ :
   - initialisation ;
   - accusé réception d'une licence ;
   - restitution d'une licence ;
- interruption de la liaison entre le serveur applicatif 15ᵢⱼ ou 15ᵢₖ et le serveur de licence 13ᵢ ;
- journalisation du compte 8i de licences (par exemple : nombre de fois qu'une licence a été attribuée à un produit client 14 référencé) ;
- réinitialisation du serveur de licences 13ᵢ.

Le dialogue entre le serveur applicatif 15ᵢⱼ ou 15ᵢₖ et son serveur de licences 13ᵢ est typiquement le suivant :
- le serveur applicatif 15ᵢⱼ ou 15ᵢₖ émet une requête vers le serveur de licences 13ᵢ ;
- le serveur de licences 13ᵢ retourne une réponse vers le serveur applicatif 15ᵢⱼ ou 15ᵢₖ ;
- une liaison est alors établie entre le serveur applicatif 15ᵢⱼ ou 15ᵢₖ et le serveur de licences 13ᵢ, à l'initiative du serveur applicatif 15ᵢⱼ ou 15ᵢₖ tel qu'un serveur Telnet selon le mode réalisation décrit précédemment.

La liaison est par exemple du type RPC, abréviations anglo-saxonnes pour "Remote Procedure Call", qui est un protocole développé par SUN et qui permet de déporter l'exécution d'un programme sur une autre machine.

Elle peut également utiliser un protocole propriétaire TCP/IP.

Pour l'établissement de la liaison entre le serveur applicatif 15ᵢⱼ ou 15ᵢₖ et le serveur de licences 13ᵢ, la structure du dialogue est la suivante :
- requête d'initialisation émise vers chaque commutateur TCP/IP, par le serveur applicatif 15ᵢⱼ ou 15ᵢₖ, véhiculant les paramètres suivants:
   - identifiant du serveur applicatif 15ᵢⱼ ou 15ᵢₖ émetteur;
   - liste des identifiants des produits client 2ᵢ et du nombre courant de licences prises respectivement par chaque serveur applicatif 15ᵢⱼ ou 15ᵢₖ (cette liste est vide à la première initialisation) ;
- acquittement de l'initialisation par le serveur de licence 13ᵢ véhiculant les paramètres suivants :
   - identifiant du serveur applicatif 15ᵢⱼ ou 15ᵢₖ ;
   - identifiant du serveur de licence 13ᵢ pour coupler le commutateur TCP/IP 9ᵢ au serveur de licences 13ᵢ.

Une fois la liaison établie la structure du dialogue est la suivante :
- demande de licence émise par un produit client 2ᵢ via le serveur applicatif 15ᵢⱼ ou 15ᵢₖ véhiculant les paramètres suivants :
   - identifiant du serveur applicatif 15ᵢⱼ ou 15ᵢₖ émetteur ;
   - référence du produit client 2ᵢ demandeur;
   - compte 8i de licences attribué au produit client 2ᵢ demandeur ;
- réponse du serveur de licences 13ᵢ véhiculant les paramètres suivants :
   - identifiant du serveur applicatif 4 destinataire ;
   - liste des identifiants des serveurs de licences 13ᵢ et du nombre de licences accordées respectivement aux produits client 2ᵢ avec lesquels ils sont connectés ;
   - référence du produit client 2ᵢ ;
   - compte 8i de licences restant.

Pour la restitution d'une licence par un produit client 2ᵢ via le serveur applicatif 15ᵢⱼ ou 15ᵢₖ avec lequel il est connecté, la structure du dialogue est la suivante :
- demande de restitution par un produit véhiculant les paramètres suivants :
   - identifiant du serveur applicatif 15ᵢⱼ ou 15ᵢₖ émetteur ;
   - identifiant du serveur de licences 13ᵢ destinataire ;
   - référence du produit client 2ᵢ ;
   - compte 8ᵢ à créditer ;
- réponse du serveur de licences 13ᵢ véhiculant les paramètres suivants :
   - identifiant du serveur applicatif 15ᵢⱼ ou 15ᵢₖ émetteur ;
   - identifiant du serveur de licences 13ᵢ récepteur ;
   - identifiant du produit client 2ᵢ émetteur;
   - compte 8ᵢ de licences à créditer;
   - compte 8ᵢ de licences crédité.

## Revendications

1. Procédé de gestion de licences dans un contexte Client/Serveur du type consistant à autoriser ou non l'accès d'une pluralité de clients (1ᵢ) demandeurs de services, à au moins un serveur applicatif destinataire (4) via un réseau de communication (5), en fonction d'un compte (8ᵢ) de licences, attribué à chaque demandeur et détenu par au moins un serveur de licences (7), caractérisé en ce qu'il consiste à établir une connexion spécifique (6) entre le serveur applicatif (4) destinataire et le serveur de licences (7), et en ce que le serveur applicatif (4) après avoir authentifié le client (1ᵢ) se substitue à lui pour obtenir et restituer les licences attribuées au client (1ᵢ) via la connexion spécifique (6).

2. Procédé selon la revendication 1, caractérisé en ce qu'après avoir attribué un compte (8ᵢ) de licences à un client référencé (1ᵢ), et installé un produit client (2ᵢ) sur la station cliente (1ᵢ), il comporte les étapes successives suivantes :
- établissement d'une première connexion (3i), à la demande de la station cliente (1ᵢ), entre la station cliente (1ᵢ) et le serveur applicatif (4) destinataire ;
- identification du produit client (2ᵢ) par le serveur applicatif destinataire (4) pour déterminer si son utilisation est soumise à licence ;
- établissement d'une deuxième connexion (6) entre le serveur applicatif (4) et le serveur de licences (7), par le serveur applicatif (4) ;
- émission vers le serveur de licences (7) d'une demande de licence au titre de la station cliente (1ᵢ), par le serveur applicatif (4) ; et
- en cas de réponse positive du serveur de licences (7) à la demande du serveur applicatif (4), maintien de la première connexion (3ᵢ) avec la station cliente (1ᵢ) et autorisation d'utiliser ses services ; ou
- en cas de réponse négative du serveur de licences (7) à la demande du serveur applicatif (4), rupture de la première connexion (3ᵢ) avec la station cliente (1ᵢ).

3. Système pour la mise en oeuvre du procédé selon l'une quelconque des revendications 1 et 2, caractérisé en ce qu'il comporte :
- au moins un serveur applicatif (4) apte à authentifier une station cliente (1ᵢ) qui désire se connecter à lui par une première connexion (3ᵢ) via le réseau de communication (5) ;
- au moins un produit client (2ᵢ) installé dans la station cliente (1ᵢ) et apte à communiquer avec le serveur applicatif destinataire (4) via la première connexion (3ᵢ) ; et
- au moins un serveur de licences (7) détenant au moins un compte de licences (8ᵢ) attribué à la station cliente (1ᵢ) ; et
- une deuxième connexion (6) établie entre le serveur applicatif destinataire (4) et le serveur de licences (7) sur laquelle transitent les informations relatives à la station cliente (1ᵢ).

4. Système selon la revendications 3, caractérisé en ce que le serveur applicatif (4) est un serveur de type Telnet communiquant, au travers du réseau Internet en exploitant le protocole TCP/IP, des informations d'authentification de la station cliente (1ᵢ) fournies par le produit client (2ᵢ) installé dans la station cliente (2ᵢ).

5. Système selon l'une quelconque des revendications 3 et 4, caractérisé en ce qu'il comporte une pluralité de serveurs applicatifs (15ᵢⱼ et 15ᵢₖ) comportant chacun l'identifiant (TNS_id) du serveur et son compte courant de licences (Current Count), et une pluralité de serveurs de licences (13ᵢ) comportant chacun l'identifiant du serveur (LS_id) et le compte de licences maximal (Max Count) attribué à un produit client référencé (14) ; chaque serveur applicatif (15ᵢⱼ et 15ᵢₖ) étant couplé à son serveur de licences (13ᵢ) respectif par une seule connexion (6).
